# EUROPEAN PATENT APPLICATION

(11) **EP 2 613 546 A2**
(43) Date of publication of application: **10.07.2013**
(21) Application number: 12198751.5
(22) Date of filing: 20.12.2012
(51) Int. Cl.: H04N 21/41, H04N 21/422, G06F 3/0488

(54) **Display apparatus, user input apparatus, and control methods thereof**

(30) Priority: 09.01.2012 KR 20120002664
(71) Applicant: Samsung Electronics Co., Ltd, Gyeonggi-do 443-742 (KR)
(72) Inventor: Lee, Dong-heon, Seoul (KR); Kim, Yoo-tai, Gyeonggi-do (KR); Suh, Ji-woo, Seoul (KR); So, Yong-jin, Seoul (KR); Yu, Seung-dong, Gyeonggi-do (KR)
(74) Representative: Hewett, Jonathan Michael Richard

(57) **Abstract**

A display apparatus, a user input apparatus, and control methods thereof are provided. The user input apparatus is connected to a display apparatus having a plurality of display modes and includes: a touch pad unit which receives a user command relating to operation of a user interface (UI) screen corresponding to a first display mode; a button unit which receives a user command relating to operation of a UI screen corresponding to a second display mode; and a communicator which transmits a mode change command, which is entered via either the touch pad unit or the button unit, to the display apparatus. The mode change command is a user command which is generated in conjunction with an execution of an operation method corresponding to a display mode which is different from a current display mode.

## Description

The present invention generally relates to a display apparatus, a user input apparatus, and control methods thereof, and more particularly, to a display apparatus having a plurality of display modes, a user input apparatus which is connected to the display apparatus, and control methods thereof.

The recent development of smart televisions (TVs) has provided various types of user interface (UI) screens, including displays of icons and other items for use by a user. It is inconvenient to control such a UI screen by using only an existing TV remote controller. Therefore, products in which touch pads are applied to user input apparatuses to provide more convenient and user-friendly input methods have been launched.

A user input apparatus which includes a touch pad typically uses a method of tapping a particular area or a flicking method having a directivity in order to cope with an existing four-way-centered UI. The user input apparatus also uses a method of additionally providing a physical button to change a four-way-centered display mode and a display mode using a pointer.

If a predetermined area of a touch pad is tapped or an additional physical button is clicked to change a mode as described above, a user operates the touch pad while simultaneously watching an input apparatus. Therefore, the user may be hindered from immersion in the use of contents, a flick operation having directivity is likely to cause a wrong operation of the user, and the user may feel tired in a long operation.

The exemplary embodiments of the present invention provide a display apparatus which can naturally and intuitionally change a display mode, a user input apparatus which enables a user to interact with the display apparatus, and control methods thereof.

The exemplary embodiments also simultaneously provide a natural change of a display mode, a four-way-centered button for entering input via the user input apparatus which is familiar to the user, and a touch pad input to provide a user with a more stable and convenient operation environment.

According to an aspect of the exemplary embodiments, there is provided a display apparatus having a plurality of display modes. The plurality of display modes includes a current display mode. The display apparatus may include: a display unit which displays a user interface (UI) screen; a communicator which receives a mode change command from a user input apparatus which is configured to execute a plurality of operation methods which respectively correspond to the plurality of display modes of the display apparatus; and a controller which rearranges the UI screen based on the received mode change command. The mode change command may be a user command which is generated in conjunction with an execution of an operation method corresponding to a respective one of the plurality of display modes which is different from the current display mode.

The plurality of display modes may include a highlight mode and a pointing mode. If the current display mode is the highlight mode, the mode change command may be generated in conjunction with an execution of an operation method used in an operation of the pointing mode. The controller may rearrange the UI screen such that the current display mode is changed to the pointing mode, based on the received mode change command.

The operation method used in the operation of the pointing mode may be a touch input method. The mode change command may be an operation which satisfies a preset number of touch drags or an operation which satisfies a preset number of touch taps.

If the highlight mode is changed to the pointing mode, the controller may display a pointer on the UI screen and incrementally increase a brightness of the display of the pointer based on the mode change command.

The plurality of display modes may include a highlight mode and a pointing mode. If the current display mode is the pointing mode, the mode change command may be generated in conjunction with an execution of an operation method used in an operation of the highlight mode. The controller may rearrange the UI screen such that the current display mode is changed to the highlight mode based on the received mode change command.

The operation method used in the operation of the highlight mode may be a button input method.

According to another aspect of the exemplary embodiments, there is provided a user input apparatus connected to a display apparatus having a plurality of display modes. The plurality of display modes includes a current display mode. The user input apparatus may include: a touch pad unit which receives a user command relating to operation of a UI screen of the display apparatus based on a first display mode; a button unit which receives a user command relating to operation of the UI screen based on a second display mode; and a communicator which transmits a mode change command, which is received via one of the touch pad unit and the button unit, to the display apparatus. The mode change command may be a user command which is generated in conjunction with an execution of an operation method corresponding to a respective one of the plurality of display modes which is different from the current display mode.

The plurality of display modes may include a highlight mode and a pointing mode. If the current display mode is the highlight mode, the mode change command may be generated in conjunction with an execution of an operation method used in an operation of the pointing mode.

The operation method used in the operation of the pointing mode may be a touch input method. The mode change command may be an operation which satisfies a preset number of touch drags or an operation which satisfies a preset number of touch taps.

The plurality of display modes may include a highlight mode and a pointing mode. If the current display mode is the pointing mode, the mode change command may be generated in conjunction with an execution of an operation method used in an operation of the highlight mode.

The operation method used in the operation of the highlight mode may be a button input method.

According to another aspect of the exemplary embodiments, there is provided a system including: a user input apparatus which receives a user command from a user; and a display apparatus which rearranges a UI screen based on a mode change command received from the user input apparatus. The mode change command may be a user command which is generated in conjunction with an execution of an operation method corresponding to a display mode which is different from a current display mode.

According to another aspect of the exemplary embodiments, there is provided a method for controlling a display apparatus having a plurality of display modes. The method may include: displaying, on the display apparatus, a UI screen corresponding to a current display mode of the plurality of display modes; receiving a mode change command from a user input apparatus, the mode change command being generated in conjunction with an execution of a respective one of a plurality of operation methods which respectively correspond to the plurality of display modes; and rearranging the UI screen based on the received mode change command. The mode change command may be a user command which is generated in conjunction with an execution of an operation method corresponding to a display mode different from the current display mode.

The plurality of display modes may include a highlight mode and a pointing mode. If the current display mode is the highlight mode, the mode change command may be generated in conjunction with an execution of an operation method used in an operation of the pointing mode. The rearranging of the UI screen may include rearranging the UI screen such that the current display mode is changed to the pointing mode, based on the received mode change command.

An operation method used in an operation of the pointing mode may be a touch input method. The mode change command may be an operation which satisfies a preset number of touch drags or an operation which satisfies a preset number of touch taps.

The rearranging of the UI screen may include: if the highlight mode is changed to the pointing mode, displaying a pointer on the UI screen and incrementally increasing a brightness of the display of the pointer based on the mode change command.

The plurality of display modes may include a highlight mode and a pointing mode. If the current display mode is the pointing mode, the mode change command may be generated in conjunction with an execution of an operation method used in an operation of the highlight mode. The rearranging of the UI screen may include rearranging the UI screen such that the current display mode is changed to the highlight mode, based on the received mode change command.

The operation method used in the operation of the highlight mode may be a button input method.

According to another aspect of the exemplary embodiments, there is provided a method for controlling a user input apparatus connected to a display apparatus having a plurality of display modes. The plurality of display modes includes a current display mode. The method may include: receiving a mode change command relating to changing the current display mode of the display apparatus; and transmitting the received mode change command to the display apparatus. The mode change command may be a user command which is generated in conjunction with an execution of an operation method corresponding to a respective one of the plurality of display modes which is different from the current display mode.

The plurality of display modes may include a highlight mode and a pointing mode. If the current display mode is the highlight mode, the mode change command may be generated in conjunction with an execution of an operation method used in an operation of the pointing mode.

The operation method used in the operation of the pointing mode may be a touch input method. The mode change command may be an operation which satisfies a preset number of touch drags or an operation which satisfies a preset number of touch taps.

The plurality of display modes may include a highlight mode and a pointing mode. If the current display mode is the pointing mode, the mode change command may be generated in conjunction with an execution of an operation method used in an operation of the highlight mode.

The operation method used in the operation of the highlight mode may be a button input method.

The above and/or other aspects will be more apparent by describing certain exemplary embodiments with reference to the accompanying drawings, in which:
FIG. 1 is a view illustrating a system which includes a display apparatus and a user input apparatus, according to an exemplary embodiment of the present invention;
FIG. 2 is a block diagram illustrating a structure of a display apparatus, according to an exemplary embodiment of the present invention;
FIG. 3 is a block diagram illustrating a structure of a user input apparatus, according to an exemplary embodiment of the present invention;
FIG. 4 is a view illustrating a structure of a touch pad and a structure of a button;
FIG. 5 is a view illustrating an operation method which may be performed by using a touch pad;
FIG. 6 is a view illustrating an operation method which may be performed by using a button;
FIG. 7 is a view illustrating a process for rearranging a user interface (UI) screen by changing a current display mode from a highlight mode to a pointing mode;
FIG. 8 is a view illustrating a process for rearranging a UI screen by changing a current display mode from a pointing mode to a highlight mode;
FIG. 9 is a flowchart illustrating a method for controlling a display apparatus, according to an exemplary embodiment of the present invention; and
FIG. 10 is a flowchart illustrating a method for controlling a user input apparatus which is connected to a display apparatus, according to an exemplary embodiment of the present invention.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail, because they would obscure the exemplary embodiments with unnecessary detail.

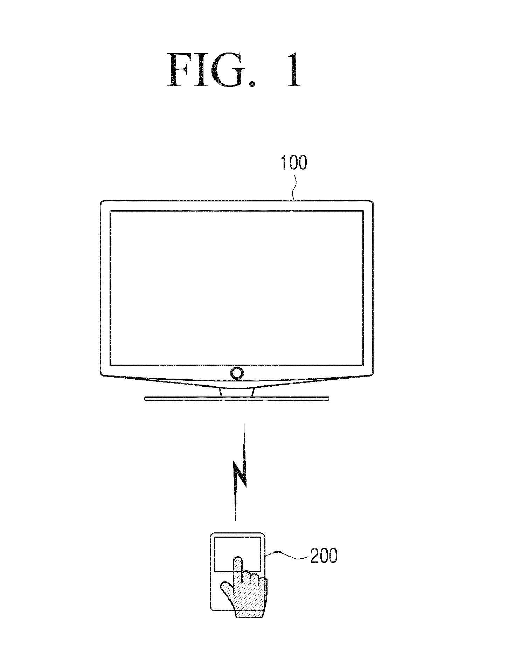

FIG. 1 is a view illustrating a system which includes a display apparatus 100 and a user input apparatus 200, according to an exemplary embodiment of the present invention.

Referring to FIG. 1, a user may control the display apparatus 100 via the user input apparatus 200. In detail, the user may input a user command, which is employed to control the display apparatus 100, by using the user input apparatus 200, and the display apparatus 100 may be controlled based on the user command received from the user input apparatus 200. For this purpose, the display apparatus 100 is connected to the user input apparatus 200 in order to communicate with the user input apparatus 200. In detail, the display apparatus 100 and the user input apparatus 200 may communicate with each other by using a wireless communication technology such as, for example, WiFi, Bluetooth, Infrared Data Association (IrDA), Radio Frequency (RF), IEEE 802.11, Wireless Local Area Network (WLAN), High-Rate Wireless Personal Area Network (HR WPAN), Ultra-Wideband (UWB), Low-Rate Wireless Personal Area Network (LR WPAN), IEEE 1394, or the like.

The display apparatus 100 may include a plurality of display modes. In particular, a display mode refers to a method for controlling a user interface (UI) screen of the display apparatus 100. For example, the display mode may include a highlight mode, a pointing mode, or the like. The highlight mode refers to a display mode by which an icon or a list on a currently selected UI screen is highlighted, and by which the highlighted item may be selected and/or moved in up, down, left, and right directions. The pointing mode refers to a display mode by which a pointer is displayed on a UI screen, and by which the pointer may be moved in order to select an icon or a list.

The user input apparatus 200 may be configured to execute a plurality of operation methods which respectively correspond to the plurality of display modes of the display apparatus 100. For example, the plurality of operation methods may include an operation method which relates to using up, down, left, and right buttons, or an operation method which relates to using a touch pad.

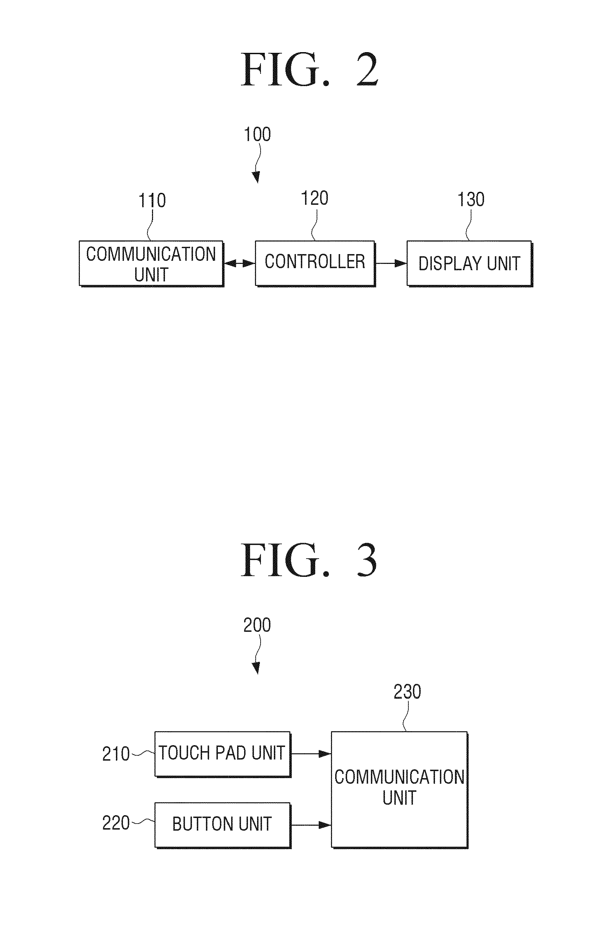

FIG. 2 is a block diagram illustrating a structure of the display apparatus 100, according to an exemplary embodiment of the present invention. Referring to FIG. 2, the display apparatus 100 includes a communication unit 110 (also referred to herein as a "communicator 110"), a controller 120, and a display unit 130.

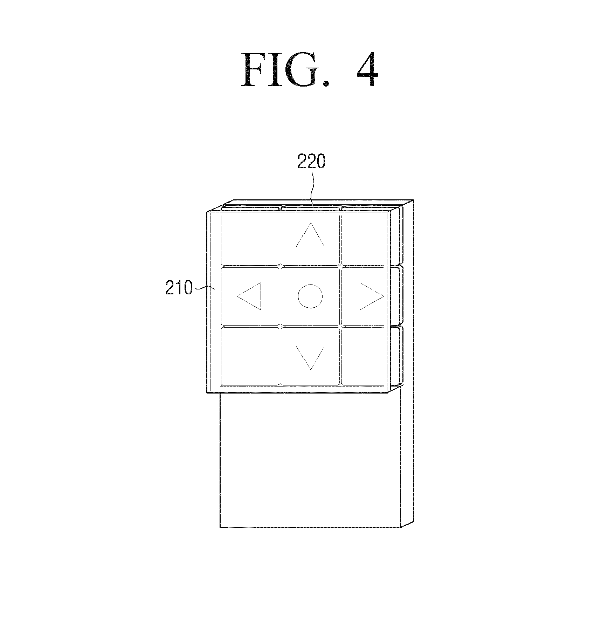

The communicator 110 receives a mode change command from the user input apparatus 200. In particular, the communicator 110 may receive a mode change command from the user input apparatus 200, which is configured to execute a plurality of operation methods which respectively correspond to the plurality of display modes of the display apparatus 100. The mode change command refers to a user command which is employed for changing a current display mode of the plurality of display modes of the display apparatus 100 of FIG. 1 to a display mode which is different from the current display mode. The current display mode refers to a display mode of the display apparatus 100 at a time when a mode change command is received. In detail, the mode change command, in one or more exemplary embodiments of the present invention, may be a user command which is generated in conjunction with an execution of an operation method corresponding to the display mode which is different from the current display mode. The operation methods respectively corresponding to the display modes and the mode change command will be described in detail below, in relation to the user input apparatus 200 with reference to FIGS. 3 and 4.

The controller 120 rearranges a UI screen which is displayed on the display unit 130. In detail, the controller 120 may rearrange the UI screen based on the mode change command received through the communicator 110. In particular, the controller 120 may control the display unit 130 to rearrange the UI screen. The controller 120 may also control an overall operation of the display apparatus 100.

The display unit 130 displays a UI screen. In detail, the display unit 130 may display UI screens respectively corresponding to the plurality of display modes. In particular, the display unit 130 may be realized as any one of various types of units, such as, for example, a cathode ray tube (CRT), a liquid crystal display (LCD), a plasma display panel (PDP), or the like.

The display unit 130 may rearrange the UI screen based on a control of the controller 120. In detail, if the mode change command is received via the communicator 110, the controller 120 may control the display unit 130 to rearrange the UI screen based on the received mode change command. Therefore, the display unit 130 may display a UI screen which corresponds to a changed display mode.

FIG. 3 is a block diagram illustrating a structure of the user input apparatus 200, according to an exemplary embodiment of the present invention. Referring to FIG. 3, the user input apparatus 200 includes a touch pad unit 210, a button unit 220, and a communication unit 230 (also referred to herein as a "communicator 230").

The touch pad unit 210 receives a user command via a touch operation performed by a user. In particular, the touch operation is an operation method by which the user contacts the touch pad unit 210 by using a fingertip or other objects in order to input the user command. For this purpose, the touch pad unit 210 may use an apparatus referred to as a touch panel. The touch panel may include, for example, a panel which detects a hand of a human or a contact position of an object having a capacitive charge by using a film capable of detecting capacitance, a panel which detects a hand of a human or a contact position of an object by using a resistive layer, or a panel which allows invisible infrared rays to flow upwards, downwards, and to the left and right to form one or more square lattices on a screen in order to detect a position of a fingertip or an object contacting the square lattices.

The touch operation (or a touch input method) is an operation method which corresponds to a pointing mode of the plurality of display modes. In particular, the touch operation is an operation method which is used in conjunction with operation of the pointing mode, and the user may input the user command via the touch pad unit 210 at a time when the current display mode is the pointing mode in order to control the display apparatus 100.

The touch operation which is executed by using the touch pad unit 210 at a time when the current display mode is the highlight mode is used to generate the mode change command. In particular, the user may input the user command via the touch pad unit 210 when the current display mode is the highlight mode in order to change the current display mode to the pointing mode.

When the current display mode is the highlight mode, the mode change command may be generated in conjunction with an execution of one of a touch drag operation and a touch tap operation which is performed by using the touch pad unit 210. The touch drag operation is performed by contacting the touch pad unit 210 by using a fingertip or an object and moving a contact part while contacting the touch pad unit 210. The touch tap operation is performed by contacting the touch pad unit 210 by using a fingertip or an object and removing the fingertip or the object from the touch pad unit 210 without moving the fingertip or the object, i.e., tapping the touch pad unit 210.

The button unit 220 receives the user command which is generated in conjunction with an execution of a button input operation performed by the user. The button input operation is performed by pressing a button of the button unit 220 in order to input the user command.

The button input operation corresponds to the highlight mode of the plurality of display modes. In particular, the button input operation (or a button input method) is an operation method which is used in conjunction with operation of the highlight mode, and the user may input the user command via the button unit 220 at a time when the current display mode is the highlight mode in order to control the display of the display apparatus 100.

The button input operation which is executed by using the button unit 220 at a time when the current display mode is the pointing mode is used to generate the mode change command. In particular, the user may input the user command via the button unit 220 when the current display mode is the pointing mode in order to change the current display mode to the highlight mode.

The communicator 230 transmits the mode change command to the display apparatus 100. In detail, the communicator 230 may transmit the mode change command, which is received via one or more of the touch pad unit 210 and the button unit 220, to the display apparatus 100.

FIG. 4 is a view illustrating a structure of the touch pad unit 210 and a structure of the button unit 220. Referring to FIG. 4, the button unit 220 is located underneath the touch pad unit 210. The button unit 220 may include up, down, left, and right buttons, which are indicated by respective arrows, and a confirm button, which is indicated by a circle symbol in the center of the button unit, and the touch pad unit 210 is positioned on top of the button unit 220 to contact the button unit 220. Therefore, the user may simultaneously operate the touch pad unit 210 and the button unit 220 in the same area without moving a hand or an object to operate the touch pad unit 210 and the button unit 220. In the present exemplary embodiment, the button unit 220 includes the up, down, left, right, and confirm buttons, as illustrated in FIG. 4. However, in other exemplary embodiments, the button unit 220 may further include one or more additional buttons, or may omit at least one of the up, down, left, right, and confirm buttons.

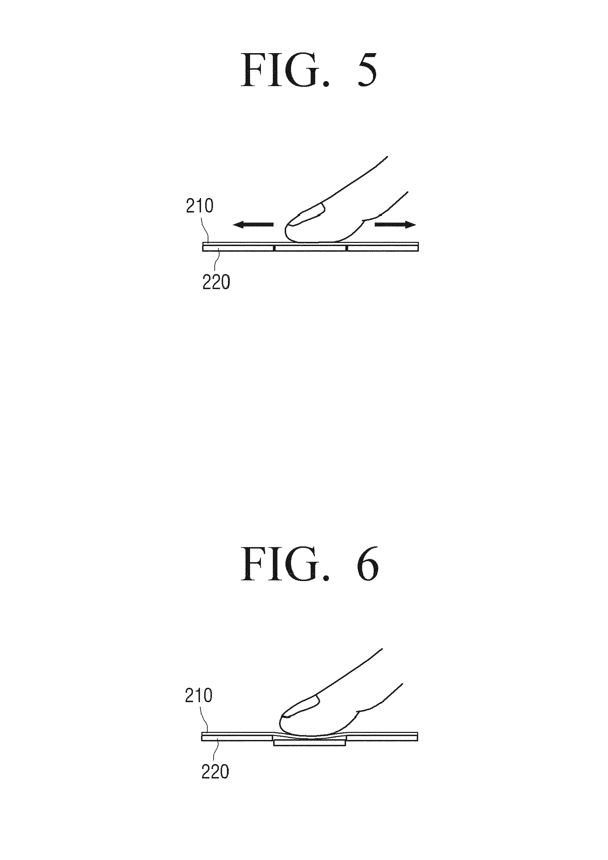

Operation methods which may be performed by using at least one of the touch pad unit 210 and the button unit 220 will now be described in detail with reference to FIGS. 5 and 6.

FIG. 5 is a view illustrating an operation method which may be performed by using the touch pad unit 210. Referring to FIG. 5, the user may contact the touch pad unit 210 with a fingertip or with an object in order to perform a touch operation. In particular, the user may operate the touch pad unit 210 without contacting the button unit 220.

FIG. 6 is a view illustrating an operation method which may be performed by using button unit 220. Referring to FIG. 6, the user may press a particular part of the touch pad unit 210 in order to contact the button unit 220, thereby performing a button input operation.

Therefore, the user may simultaneously operate the touch pad unit 210 and the button unit 220 in the same area. Further, if the user lightly contacts the touch pad unit 210, the user may perform the touch operation. If the user presses the touch pad unit 210 with a constant force or more, the user may perform the button input operation. In particular, the user may perform the button input operation by using the button unit 220 when the current display mode is the highlight mode in order to control the display apparatus 100. If the user wants to change the current display mode, the user may lightly contact the touch pad unit 210 in order to input a mode change command which causes the current display mode to be changed to the pointing mode. The user may also perform the touch operation by using the touch pad unit 210 when the current display mode is the pointing mode in order to control the display apparatus 100. If the user wants to change the current display mode, the user may press the touch pad unit 210 with the constant force or more in order to perform the button input operation via the button unit 220 in order to input a mode change command which causes the current display mode to be changed to the highlight mode.

However, the user contacts the touch pad unit 210 in order to perform the button input operation. Therefore, even if the user intends to perform the button input operation when the current display mode is the highlight mode, the user may contact the touch pad unit 210 to change the current display mode to the pointing mode. Therefore, if a touch drag operation satisfies at least one of a preset number of drags and a preset drag length, the user may change the current display mode. For example, if a touch drag operation is performed by executing a drag having a preset length or more from the user, the current display mode may be changed to the pointing mode. Further, if the touch drag operation is performed a preset number of times or more, the current display mode may be changed to the pointing mode. If the touch drag operation satisfies both of the preset drag length and the preset number of drags, the current display mode may be changed to the pointing mode.

If the touch tap operation satisfies a preset number of taps, the current display mode may be changed. For example, if the preset number or more of touch tap operations are performed by the user, the current display mode may be changed to the pointing mode.

Whether one or more of the touch drag operation and the touch tap operation are used for a mode change, a threshold drag length, the threshold number of drags, and the threshold number of taps may be set by the user. Therefore, a contact with the touch pad unit 210 which is accompanied by the button input operation and an unintended change of the current display mode to the pointing mode caused by a mistake of the user may be prevented.

In the present exemplary embodiment, only the mode change command to change the current display mode from the highlight mode to the pointing mode has been described. However, a mode change command to change the current display mode from the pointing mode to the highlight mode may be defined to change the current display mode if the button input operation is performed the preset number of times.

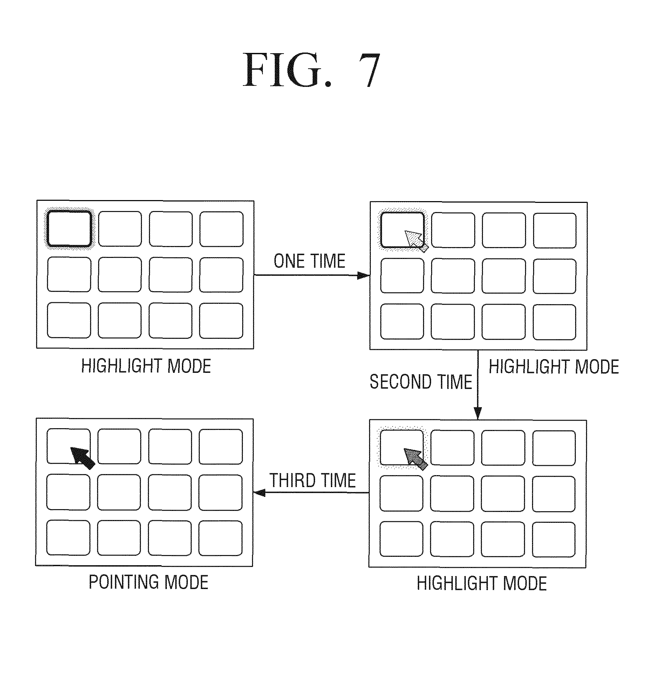

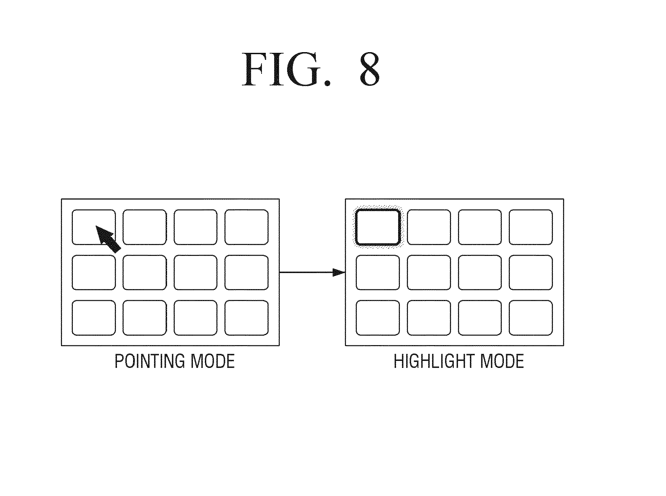

A process of rearranging a UI screen in the display unit 130 based on a mode change command will be described in detail with reference to FIGS. 7 and 8.

FIG. 7 is a view illustrating a process for rearranging a UI screen by changing a current display mode from a highlight mode to a pointing mode. Referring to FIG. 7, if the current display mode is changed from the highlight mode to the pointing mode, a highlight disappears from the UI screen, and a pointer is displayed on an icon on which the highlight had previously been located.

In particular, an operation of causing a disappearance of the highlight from the UI screen and an operation of displaying the pointer may be expressed incrementally, for example, on a step by step basis. As described above, the change from the highlight mode to the pointing mode may be achieved by execution of a touch operation. If the touch operation satisfies a preset standard, the highlight mode may be changed to the pointing mode.

In FIG. 7, the user exemplarily defines a mode change command to correspond to one of a three-time drag or a three-time tap. Referring to FIG. 7, the UI screen for which the current display mode is the highlight mode is illustrated at the top left portion of the figure. If the user performs a touch drag operation or a touch tap operation one time, the highlight becomes incrementally dimmer, and the pointer is dimly displayed on the icon on which the highlight is located, as illustrated at the top right portion of the figure. In particular, if the user performs the touch drag operation or the touch tap operation a second time, the highlight becomes even dimmer, and the pointer becomes incrementally brighter. If the user performs the touch drag operation or the touch tap operation a third time, the highlight disappears, and the brightness of the pointer is maximized, thereby effectively changing the current display mode to the pointing mode. Therefore, the user may check whether the highlight mode has been changed to the pointing mode, by viewing the UI screen.

In this example, before the user performs the touch drag operation or the touch tap operation for the third time, the current display mode corresponds to the highlight mode, and the dimly displayed pointer does not move based on a touch operation. Further, if a predetermined time elapses without a touch operation when the highlight mode is being changed to the pointing mode, the pointer gradually dims. Therefore, continuous touch inputs of the user for changing the highlight mode to the pointing mode may be induced.

According to another exemplary embodiment, if the user defines a mode change command to correspond to one of a one-time drag and a drag input of a predetermined length, the pointer may gradually become bright, based on a length of a touch drag input of the user.

FIG. 8 is a view illustrating a process for rearranging a UI screen by changing a current display mode from a pointing mode to a highlight mode. If the current display mode is changed from the pointing mode to the highlight mode, a pointer disappears from the UI screen, and an icon on which the pointer had previously been located is highlighted.

The UI screen includes only icons in the present exemplary embodiment, but may include other expressing means in other exemplary embodiments.

Further, similarly as described above with reference to FIG. 7 and the exemplary embodiment illustrated therein, an operation for causing a disappearance of the pointer from the UI screen and an operation for displaying the highlight may be expressed incrementally, for example, on a step by step basis.

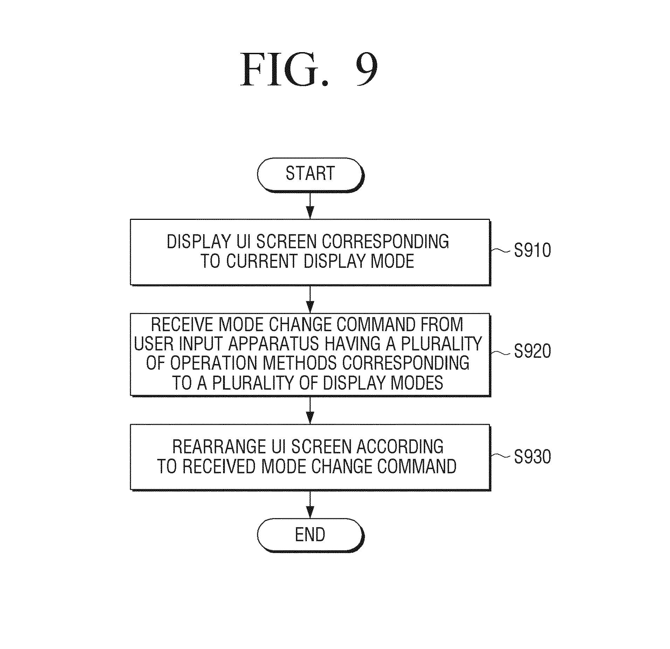

FIG. 9 is a flowchart illustrating a method for controlling a display apparatus, according to an exemplary embodiment of the present invention.

Referring to FIG. 9, in operation S910, a UI screen corresponding to a preset current display mode is displayed. In detail, the display apparatus has a plurality of display modes, and a UI screen corresponding to a current one of the plurality of display modes is displayed. The plurality of display modes may include, for example, a highlight mode and a pointing mode. A highlight may be displayed on the UI screen when the current display mode is the highlight mode, and a pointer may be displayed on the UI screen when the current display mode is the pointing mode.

In operation S920, a mode change command is received from a user input apparatus which is configured to execute a plurality of operation methods which respectively correspond to the plurality of display modes. In particular, the mode change command refers to a user command which is generated in conjunction with an execution of an operation method corresponding to a respective one of the plurality of display modes which is different from the current display mode. As described above, the user input apparatus receives the user command by performance of a respective one of the plurality of operation methods which respectively correspond to the plurality of display modes. In detail, an operation method used in conjunction with the highlight mode refers to a button input method performed via a button unit, and the respective mode change command which is used in conjunction with the highlight mode refers to a touch operation performed via a touch pad unit. In particular, the mode change command which is used in conjunction with the highlight mode may be an operation which satisfies a preset number of touch drags or a preset number of touch taps. An operation method used in conjunction with the pointing mode refers to a touch input method performed via the touch pad unit, and the respective mode change command which is used in conjunction with the pointing mode refers to a button input operation performed via the button unit.

In operation S930, the UI screen is rearranged, based on the received mode change command. In detail, if the current display mode is changed from the highlight mode to the pointing mode, the highlight disappears from the UI screen, and the pointer is displayed on an icon on which the highlight had previously been located. If the current display mode is changed from the pointing mode to the highlight mode, the pointer disappears from the UI screen, and the highlight is displayed on the icon on which the pointer had previously been located. In one or more exemplary embodiments, operations of causing a disappearance of one or more of the highlight and the pointer and displaying one or more of the highlight and the pointer on the UI screen may be expressed incrementally, for example, on a step by step basis.

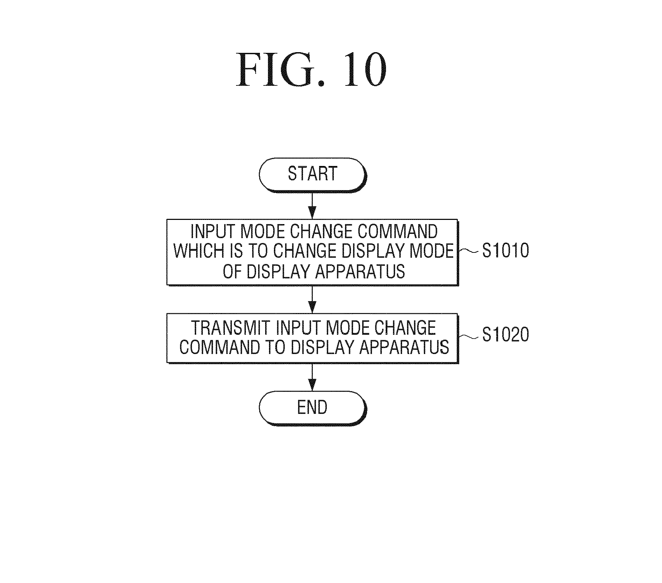

FIG. 10 is a flowchart illustrating a method for controlling a user input apparatus connected to a display apparatus, according to an exemplary embodiment of the present invention.

Referring to FIG. 10, in operation S1010, a mode change command, which is employed for changing a current display mode of the display apparatus, is inputted. In operation S1020, the inputted mode change command is transmitted to the display apparatus. In particular, the mode change command refers to a user command which is generated in conjunction with an execution of an operation method which corresponds to a display mode which is different from a current display mode.

As described above, in some exemplary embodiments, the plurality of display modes includes only a highlight mode and a pointing mode, and a mode change command is generated via only a touch pad unit and a button unit. However, in other exemplary embodiments, the plurality of display modes may correspond to, for example, an operation method of inputting a user command based on a motion of a user input apparatus by using a 3-dimensional (3D) motion sensor, other methods of controlling a UI screen with respect to the current display mode based on the user command, and a respective operation method corresponding to each of the other methods.

The foregoing exemplary embodiments and advantages are merely exemplary and are not to be construed as limiting. The present disclosure can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus having a plurality of display modes, the plurality of display modes including a current display mode, and the display apparatus comprising:
a display unit which displays a user interface (UI) screen;
a communicator which receives a mode change command from a user input apparatus configured to execute a plurality of operation methods which respectively correspond to the plurality of display modes of the display apparatus; and
a controller which rearranges the UI screen based on the received mode change command,
wherein the mode change command is a user command which is generated in conjunction with an execution of an operation method corresponding to a respective one of the plurality of display modes which is different from the current display mode.

2. The display apparatus of claim 1, wherein:
the plurality of display modes comprises a highlight mode and a pointing mode;
if the current display mode is the highlight mode, the mode change command is generated in conjunction with an execution of an operation method used in an operation of the pointing mode; and
the controller rearranges the UI screen such that the current display mode is changed to the pointing mode, based on the received mode change command.

3. The display apparatus of claim 2, wherein the operation method used in the operation of the pointing mode is a touch input method.

4. The display apparatus of claim 3, wherein the mode change command is an operation which satisfies a preset number of touch drags.

5. The display apparatus of claim 3, wherein the mode change command is an operation which satisfies a preset number of touch taps.

6. The display apparatus of claim 2, wherein if the highlight mode is changed to the pointing mode, the controller displays a pointer on the UI screen and incrementally increases a brightness of the display of the pointer based on the mode change command.

7. The display apparatus of claim 1, wherein:
the plurality of display modes comprises a highlight mode and a pointing mode;
if the current display mode is the pointing mode, the mode change command is generated in conjunction with an execution of an operation method used in an operation of the highlight mode; and
the controller rearranges the UI screen such that the current display mode is changed to the highlight mode based on the received mode change command.

8. The display apparatus of claim 7, wherein the operation method used in the operation of the highlight mode is a button input method.

9. A user input apparatus connected to a display apparatus having a plurality of display modes, the plurality of display modes including a current display mode, and the user input apparatus comprising:
a touch pad unit which receives a user command relating to operation of a user interface (UI) screen of the display apparatus based on a first display mode;
a button unit which receives a user command relating to operation of UI screen based on a second display mode; and
a communicator which transmits a mode change command, which is received via one of the touch pad unit and the button unit, to the display apparatus,
wherein the mode change command is a user command which is generated in conjunction with an execution of an operation method corresponding to a respective one of the plurality of display modes which is different from the current display mode.

10. The user input apparatus of claim 9, wherein the plurality of display modes comprises a highlight mode and a pointing mode,
wherein if the current display mode is the highlight mode, the mode change command is generated in conjunction with an execution of an operation method used in an operation of the pointing mode.

11. The user input apparatus of claim 9, wherein the plurality of display modes comprises a highlight mode and a pointing mode,
wherein if the current display mode is the pointing mode, the mode change command is generated in conjunction with an execution of an operation method used in an operation of the highlight mode.

12. A method for controlling a display apparatus having a plurality of display modes, the method comprising:
displaying, on the display apparatus, a user interface (UI) screen corresponding to a current display mode of the plurality of display modes;
receiving a mode change command from a user input apparatus, the mode change command being generated in conjunction with an execution of a respective one of a plurality of operation methods which respectively correspond to the plurality of display modes; and
rearranging the UI screen based on the received mode change command,
wherein the mode change command is a user command which is generated in conjunction with an execution of an operation method corresponding to a display mode different from the current display mode.

13. The method of claim 12, wherein:
the plurality of display modes comprises a highlight mode and a pointing mode;
if the current display mode is the highlight mode, the mode change command is generated in conjunction with an execution of an operation method used in an operation of the pointing mode; and
the rearranging of the UI screen comprises rearranging the UI screen such that the current display mode is changed to the pointing mode, based on the received mode change command.

14. The method of claim 12, wherein:
the plurality of display modes comprises a highlight mode and a pointing mode;
if the current display mode is the pointing mode, the mode change command is generated in conjunction with an execution of an operation method used in an operation of the highlight mode; and
the rearranging of the UI screen comprises rearranging the UI screen such that the current display mode is changed to the highlight mode, based on the received mode change command.

15. A method for controlling a user input apparatus connected to a display apparatus having a plurality of display modes, the plurality of display modes including a current display mode, and the method comprising:
receiving a mode change command relating to changing the current display mode of the display apparatus; and
transmitting the received mode change command to the display apparatus,
wherein the mode change command is a user command which is generated in conjunction with an execution of an operation method corresponding to a respective one of the plurality of display modes which is different from the current display mode.
